# EUROPÄISCHE PATENTANMELDUNG

(11) **EP 4 549 687 A1**
(43) Veröffentlichungstag der Anmeldung: **07.05.2025**
(21) Anmeldenummer: 24208266.7
(22) Anmeldetag: 23.10.2024
(51) Int. Cl.: E05D 3/12, B60J 7/16, E05F 15/53

(54) **SCHARNIER UND KLAPPMECHANISMUS, SOWIE EINE DAMIT AUSGESTATTE WANNE**

(30) Priorität: 30.10.2023 DE 202023106295 U
(71) Anmelder: Krampe Fahrzeugbau GmbH, 48653 Coesfeld (DE)
(72) Erfinder: Krampe, Robin, 48653 Coesfeld (DE)
(74) Vertreter: Seyer & Nobbe Patentanwälte PartmbB

(57) **Zusammenfassung**

Scharnier (1), insbesondere für einen Klappmechanismus (12) einer Laderaumabdeckung, **gekennzeichnet durch** ein Getriebe mit einem Hebelarm (3) und einen Grundkörper (2), wobei der Hebelarm (2) um eine Achse (AX) herum rotierbar gelagert oder befestigt ist, und wobei die Achse (AX) auch in dem Grundkörper (2) gelagert oder befestigt ist, und wobei der Hebelarm (3) eine weitere Achse (5) aufweist, an der ein Rotationskörper (6), insbesondere ein Zahnrad, mit einem, bevorzugt umfangsseitigen, Zahnsegment (7) rotierbar gelagert ist.

## Beschreibung

Die vorliegende Erfindung betrifft ein Scharnier, insbesondere für einen Klappmechanismus einer Laderaumabdeckung. Die Erfindung betrifft auch einen Klappmechanismus und eine Wanne mit einem solchen Klappmechanismus.

Viele Nutzfahrzeuge und Anhänger, wie beispielsweise Muldenkipper, Wannenkipper aber auch Kipplaster und Abschieber-Fahrzeuge, weisen zum Transport von Material und gegebenenfalls zum Verkippen oder Abschieben desselben eine Wanne auf. Auch im landwirtschaftlichen Bereich werden derartige Wannen eingesetzt, beispielsweise um Erntegut oder Schnittgut zu transportieren.

Je nach Einsatzzweck und Ladegut weisen derartige Wannen eine Laderaumabdeckung auf, um das Ladegut vor Witterung oder Verunreinigungen zu schützen oder um zu verhindern, dass Ladegut ungewollt aus der Wanne gelangt. Im einfachsten Fall kann die Wanne mittels einer Plane abgedeckt werden, die umständlich an der Wanne befestigt und bei Bedarf ebenso umständlich wieder entfernt werden muss. Eine Laderaumabdeckung kann aber beispielsweise auch mittels einer oder mehrerer Klappen realisiert sein, welche die obere Öffnung der Wanne abdeckt bzw. abdecken. Zum Beladen oder Befüllen der Wanne muss die Wanne wieder geöffnet werden. Dazu können die Klappen beispielsweise mittels eines Klappmechanismus aufgeklappt werden.

Der Klappmechanismus weist dazu in der Regel ein oder mehrere Scharniere auf. Ein Problem bei den bisher bekannten Klappmechanismen besteht darin, dass der Drehpunkt des Scharniers in aufgeklappten Zustand in Bezug auf die Wanne und die Klappe vorstehen muss, damit die Klappen die Wanne verschließen können. Dies vergrößert die Außenabmessungen der Wanne, was nachteilig bei der Handhabung der Wanne sein kann und zusätzlich eine Verletzungsgefahr darstellen kann.

Nachfolgend werden die Begriffe Klappe, Abdeckung, Laderaumabdeckung, Klapprahmen, Abdeckrahmen weitgehend synonym benutzt. Selbstverständlich können im Einzelfall Unterschiede zwischen den Begriffen entscheidend oder vorteilhaft/nachteilig sein. Wird nicht auf solche Unterschiede hingewiesen, so handelt es sich grundsätzlich um einen Körper oder ein Funktionselement, welches durch ein erfindungsgemäßes Scharnier bzw. einen erfindungsgemäßen Klappmechanismus verschwenkt werden kann und dazu geeignet ist, eine Laderaumabdeckung zu bilden.

Ein weiterer Nachteil besteht darin, dass die Klappen im aufgeklappten Zustand an den seitlichen Wänden der Wanne herunterhängen und dabei nahezu oder de facto an den seitlichen Wänden anliegen. Viele Wannen weisen jedoch eine öffenbare Heckklappe mit einem Heckklappengestänge auf. Das Heckklappengestänge verläuft in der Regel ebenfalls seitlich der Wanne. Somit ist es bei verschließbaren Wannen mit einem herkömmlichen Klappmechanismus nicht ohne Weiteres oder gar nicht möglich, eine öffenbare Heckklappe zu verwenden. Für das Heckklappengestänge ist bei derartigen Wannen seitlich auf Grund des Klappmechanismus bzw. der herkömmlichen Scharniere kein Platz.

Eine Aufgabe der vorliegenden Erfindung besteht darin, ein Scharnier bereitzustellen, mit dem die vorbeschriebenen Nachteile behoben sind.

Diese Aufgabe wird mit einem Scharnier mit den Merkmalen des Anspruchs 1 dadurch gelöst, dass das Scharnier ein Getriebe mit einem Hebelarm und einen Grundkörper aufweist, wobei der Hebelarm um eine Achse herum rotierbar gelagert oder befestigt ist, und wobei die Achse auch in dem Grundkörper gelagert oder befestigt ist, und wobei der Hebelarm eine weitere Achse aufweist, an der ein Rotationskörper, insbesondere ein Zahnrad, mit einem, bevorzugt umfangsseitigen, Zahnsegment rotierbar gelagert ist.

Weitere Vorteile ergeben sich aus den Unteransprüchen.

Dadurch, dass das Scharnier ein Getriebe aufweist, kann das Scharnier derart ausgestaltet werden, dass die Klappe im aufgeklappten Zustand nicht an einer Wannenwand anliegt. Auf diese Weise ist zwischen der Wannenwand und der Klappe ein Spalt, der ausreichend groß sein kann, um weitere Funktionselemente wie ein Heckklappengestänge aufzunehmen. Darüber hinaus kann das Scharnier so ausgestaltet sein, dass der Drehpunkt des Scharniers nicht über die Klappe und/oder die Wanne hinausragt, was die Wanne besonders nutzerfreundlich, kompakt und sicher für den Benutzer macht.

Der Grundkörper kann beispielsweise an einer Wannenwand befestigt sein und eine Aufnahme oder ein Lager für eine Achse in Form einer Metallwelle aufweisen. An der Achse bzw. der Metallwelle kann der Hebelarm ebenfalls rotierbar gelagert sein. Diese Achse bildet den Drehpunkt des Scharniers. Es sind Ausführungen denkbar, bei denen sich die Welle mit dem Hebelarm dreht. Es sind aber auch Ausführungen denkbar, bei denen die Welle fest ist und der Hebelarm direkt um die Welle herum rotieren kann. Entscheidend ist, dass der Hebelarm in Bezug zum Grundkörper eine definierte Stellung mit einem Rotationsfreiheitsgrad aufweist und rotierbar bzw. verschwenkbar ist. Die Achse bezieht sich somit auf die geometrische Achse, um die der Hebelarm rotierbar ist und nicht notwendigerweise auf die körperliche Welle, welche bei manchen Ausführungsformen auch starr sein kann.

Die Achse kann beispielsweise in einem mittleren Abschnitt des Hebelarms oder mit einem Versatz zur Mitte des Hebelarms angeordnet sein. Dadurch kann die Hebelwirkung des Hebelarms eingestellt werden.

Die weitere Achse kann beispielsweise in einer Aufnahme bzw. einem Lager an einem Ende des Hebelarms angeordnet sein und ebenfalls die Form einer Welle haben. An der Welle ist dann der Rotationskörper wie beispielsweise ein Zahnrad rotierbar angeordnet. Das Zahnrad muss nicht über den gesamten Umfang Zähne aufweisen, sondern kann bevorzugt ein umfangsseitiges Zahnsegment aufweisen. Das Zahnsegment kann derart ausgestaltet sein, dass das Zahnrad nur über einen definierten Abschnitt antreibbar ist und in einer korrespondierenden Aufnahme nur über das Zahnsegment, nicht aber über den gesamten Umfang des Rotationskörpers verfahren kann. Auf diese Weise kann ein vordefinierter Verschwenkweg eingestellt werden.

Bei einer Ausführungsform weist der Grundkörper eine Verzahnung auf, welche mit dem Zahnsegment des Hebelarms korrespondiert, derart, dass das Zahnsegment beim Verstellen des Hebelarms in die Verzahnung eingreifend entlang der Verzahnung verfährt und rotiert.

Die Verzahnung kann beispielsweise durch angeformte Zähne im Grundkörper gebildet sein. Es können aber auch gesonderte Bauteile wie Rollen, Stäbe, Zylinder oder Wellen in dem Grundkörper angeordnet sein, die so beabstandet sind, dass das Zahnsegment des Rotationskörpers in die Zwischenräume eingreift und entlang der Verzahnung verfahren kann. Auf diese Weise bildet der Grundkörper und der Hebelarm mit dem Rotationskörper das Getriebe, welches durch Betätigen des Hebelarms angetrieben werden kann.

Bei einer weiteren Ausführungsform ist die Verzahnung auf oder in einem kreisförmigen bzw. kreissegmentförmigen Abschnitt des Grundkörpers angeordnet.

Durch Betätigen des an einer Achse gelagerten Hebelarms beschreibt die Bewegung des Rotationskörpers einen Kreis oder ein Kreissegment. Die Verzahnung des Grundkörpers ist auf oder in einem derartigen Kreis oder Kreissegment angeordnet, so dass der Rotationskörper beim Betätigen des Hebelarmes entlang dieses Kreises oder Kreissegments entlanggeführt ist und mit der Verzahnung zusammenwirkt.

Bei einer weiteren Ausführungsform ist ein Radius des kreisförmigen bzw. kreissegmentförmigen Abschnitts mindestens 1,5-mal, insbesondere 3-mal, größer als ein Radius des Zahnsegments.

Unter Radius wird hier und im Folgenden der Abstand zwischen dem Zahnsegment bzw. der Verzahnung und der jeweiligen Achse verstanden. Dadurch, dass sich die beiden Radien unterscheiden, kann die Übersetzung des Getriebes eingestellt werden. Ist der Radius des Grundkörperabschnitts beispielsweise 3-mal so groß wie der Radius des Rotationskörpers, hat das Getriebe eine Übersetzung von 3. Dem Fachmann ist klar, dass der Hebelarm, die Materialien und die Dimensionen aller beteiligten Komponenten auf die etwaig auftretenden mechanischen Belastungen abgestimmt sein müssen. Selbstverständlich sind auch andere Übersetzungen möglich und gegebenenfalls vorteilhaft. Entscheidend ist, dass die Bewegung des Hebelarms mit einer einstellbaren Übersetzung auf den Rotationskörper übertragen werden kann.

Bei einer weiteren Ausführungsform liegt das Zahnsegment auf einem Dreiviertelkreis. Das bedeutet beispielsweise, dass das Zahnsegment Dreiviertel des Umfangs des Rotationskörpers ausmacht.

Bei einer weiteren Ausführungsform liegt die Verzahnung auf einem Viertelkreis. Das bedeutet, der kreissegmentförmige Abschnitt des Grundkörpers beschreibt einen Viertelkreis.

Liegt das Zahnsegment auf einem Dreiviertelkreis und die Verzahnung auf einem Viertelkreis und haben die Radien ein Verhältnis von drei, dann rotiert der Rotationskörper beim Abfahren des Viertelkreises (90°) um 270°, was einer Übersetzung von 3 entspricht. Wie beschrieben, sind selbstverständlich auch andere Übersetzungen möglich. Die Kreisabschnitte und Radien müssen/können dann entsprechend angepasst werden.

Bei einer bevorzugten Ausführungsform weist der Rotationskörper eine Anbindung für ein Funktionselement, insbesondere für eine Klappe oder einen Verdeckrahmen, auf.

Die Anbindung kann beispielsweise in Form einer angeformten Halterung gebildet sein, wobei die Halterung in einem Bereich angeordnet ist, in dem der Rotationskörper keine Zähne aufweist. Beispielsweise kann die Anbindung umfangsseitig an das Zahnsegment anschließen. Dadurch kann der Rotationskörper genau soweit rotieren, wie es das Zahnsegment erlaubt, wobei die Anbindung gleichzeitig mitrotiert. Ein an der Anbindung angeordnetes Funktionselement wie beispielsweise eine Laderaumabdeckung in Form einer Klappe wird dadurch mitverschwenkt. Bei der vorbeschriebenen Ausführungsform kann beispielsweise eine Klappe um 270° aus einer vertikalen Position in eine horizontale Position verschwenkt werden. Selbstverständlich kann das Funktionselement auch direkt an den Rotationskörper bzw. der Rotationskörper an das Funktionselement angeformt sein. Die Anbindung kann grundsätzlich aber auch in axialer Richtung neben dem Zahnsegment liegend angeordnet sein, beispielsweise indem die Anbindung koaxial an das Zahnsegment angeformt ist.

Über die Länge der Anbindung und über den Radius des Grundkörpers kann vorteilhaft der Abstand einer Klappe zur Wannenwand in aufgeklapptem Zustand eingestellt werden. Darüber hinaus kann auch eingestellt werden, wie weit die Drehachse von einer Ladekante oder einer Rahmenkrone entfernt angeordnet ist. Sowohl die Ausmaße als auch die Übersetzung können an die jeweiligen Anforderungen angepasst werden. Das Scharnier ist somit für eine Vielzahl von Anwendungen, insbesondere auch außerhalb von Wannen und Nutzfahrzeugen, geeignet.

Bei einer weiteren Ausführungsform weist der Hebelarm einen Antrieb oder einen Anschluss für einen Antrieb, insbesondere für einen Hydraulikzylinder, auf.

Der Antrieb kann beispielsweise durch einen ansteuerbaren Hydraulikzylinder gebildet sein. Der Hydraulikzylinder kann dann beispielsweise am Hebelarm an der der zweiten Achse gegenüberliegenden Seite befestigt sein und beispielsweise eine Zugkraft auf den Hebelarm wirken und den Rotationskörper so nach oben verstellen. Durch die Lage der zentralen Achse am Hebelarm kann dabei die Hebelwirkung eingestellt werden. Der Antrieb kann dann so ausgelegt sein, dass der Benutzer die Abdeckung des Laderaums beispielsweise von einem Führerhaus aus steuern kann. Selbstverständlich sind auch andere Antriebsformen wie ein manueller Antrieb beispielsweise in Form einer Kurbel, eine Pneumatik oder ein Elektromotor denkbar und möglich.

Bei einer weiteren Ausführungsform weist der Grundkörper Haltemittel oder Aufnahmen für Haltemittel zur Befestigung an einem Körper, insbesondere an einer Wanne eines Nutzfahrzeugs oder Anhängers, auf.

Beispielsweise kann der Grundkörper einen angeformten Haken aufweisen, mit dem der Grundkörper an eine Ladekante einer Wanne eingehängt werden kann. Der Grundkörper kann alternativ oder zusätzlich auch Bohrungen für Schrauben oder Bolzen aufweisen und an eine Wanne angeschraubt oder genietet werden. Der oder die Haken können dann beispielsweise zusätzliche Stabilität bieten. Selbstverständlich sind auch andere Haltemittel denkbar und möglich, entscheidend ist, dass der Grundkörper hinreichend sicher und stabil an dem Körper befestigt oder befestigbar ist.

Die vorliegende Erfindung betrifft auch einen Klappmechanismus, insbesondere für eine Laderaumabdeckung eines Nutzfahrzeugs oder Anhängers, mit zumindest einer Klappe oder zumindest einem Verdeckrahmen.

Erfindungsgemäß weist der Klappmechanismus ein Scharnier der vorbeschriebenen Art auf. Die Vorteile ergeben sich aus den beschriebenen Vorteilen des Scharniers, so dass der Klappmechanismus die beschriebenen Nachteile des Stands der Technik nicht aufweist.

Bei einer Ausführungsform ist die Klappe oder der Verdeckrahmen durch mindestens zwei, insbesondere drei oder vier, Scharniere gehalten. Selbstverständlich können auch fünf oder mehr Scharniere vorteilhaft sein. Entscheidend ist, dass die Klappe sicher gehalten ist und die Scharniere und die Klappe stabil und robust genug sind, um die Klappe zu verschwenken.

Bei einer weiteren Ausführungsform ist das Scharnier derart ausgelegt, dass die Klappe oder der Klappenrahmen um einen Winkel größer 90°, insbesondere um 270°, verschwenkt werden kann.

Dazu sind die Abmessungen vom Grundkörper, Rotationskörper und Hebelarm derart zu wählen, dass die gewünschte Übersetzung und der gewünschte Verschwenkwinkel eingestellt werden kann. Soll die Klappe aus einer seitlichen vertikalen Position heraus auf die Wanne als Laderaumabdeckung verschwenkt werden, wird in der Regel ein Verschwenkwinkel von 270° benötigt. Der Klappmechanismus kann aber auch für andere Einsatzzwecke verwendet werden, beispielsweise können die Klappen von einer herunterhängenden vertikalen Position in eine aufrechte vertikale Position verschwenkt werden, beispielsweise um eine temporäre Erhöhung des Wannenvolumens zu erzielen. In diesem Fall kann ein Verschwenkwinkel von 180° gewünscht sein. Dann können entsprechende Klappmechanismen auch an den Stirnseiten der Wanne angeordnet sein. Es kann aber auch sein, dass die Klappen als Luken für das Be- und Entladen der Wanne dienen. In diesem Fall kann ein Verschwenkwinkel von 90° gewünscht sein, so dass die Klappen aufgeklappt werden können.

Es versteht sich von selbst, dass auch andere Winkel möglich sind und vorteilhaft sein können. Ebenso ist dem Fachmann klar, dass die Winkelangaben nur im Rahmen der gebotenen Sorgfalt genau sein müssen. Selbstverständlich können auch Winkel von beispielsweise 91°, 183°, 268° oder ähnliches vorteilhaft sein und sind ebenso erfindungsgemäß.

Bei einer bevorzugten Ausführungsform verschwenkt die Klappe bei Betätigung des Scharniers, insbesondere eines Hebelarms, von einer vertikalen Lage in eine horizontale Lage. Diese Ausführungsform eignet sich somit besonders für eine Laderaumabdeckung.

Die vorliegende Erfindung betrifft auch eine Wanne, insbesondere für ein Nutzfahrzeug oder Anhänger. Erfindungsgemäß weist die Wanne einen Klappmechanismus der vorbeschriebenen Art auf.

Bei einer bevorzugten Ausführungsform ist an mindestens einer seitlichen Wannenwand mindestens ein Klappmechanismus angeordnet. Insbesondere können an beiden seitlichen Wannenwänden ein Klappmechanismus angeordnet sein, so dass im geschlossenen Zustand jeweils ein Klappmechanismus beispielsweise die Hälfte der Laderaumöffnung verdeckt.

Es können auch mehrere Klappmechanismen nebeneinander an einer seitlichen Wannenwand angeordnet sein. Beispielsweise wenn nur ein Teil der Laderaumöffnung verschließbar sein soll oder wenn verschiedene Abschnitte der Laderaumöffnung unabhängig voneinander verschließbar sein sollen.

Bei einer bevorzugten Ausführungsform besteht zwischen der Klappe oder dem Verdeckrahmen und einer Wannenwand im aufgeklappten Zustand ein Spalt, insbesondere zur Aufnahme von Heckklappengestänges oder anderer Funktionselemente.

Selbstverständlich muss der Spalt entsprechend groß sein, um sinnvoll genutzt zu werden. Der Spalt bzw. der Abstand der Klappe oder des Verdeckrahmens zur Wannenwand kann wie vorbeschrieben über die Dimensionierung des Scharniers eingestellt werden.

Nachfolgend wird die Erfindung anhand eines Ausführungsbeispiels näher erläutert. Selbstverständlich ist die Erfindung nicht auf dieses Ausführungsbeispiel beschränkt.

Es zeigen:
Fig. 1 ein erfindungsgemäßes Scharnier in einer ersten Position;
Fig. 2 das gleiche Scharnier wie in Fig. 1 in einer zweiten Position;
Fig. 3 einen Ausschnitt einer aufgeklappte Laderaumabdeckung an einer Wanne;
Fig. 4 eine Heckansicht einer geschlossenen Wanne;
Fig. 5 eine Frontansicht einer geschlossenen Wanne;
Fig. 6 eine Heckansicht einer geöffneten Wanne;
Fig. 7 eine Wanne mit Klappmechanismus in einer Seitenansicht.

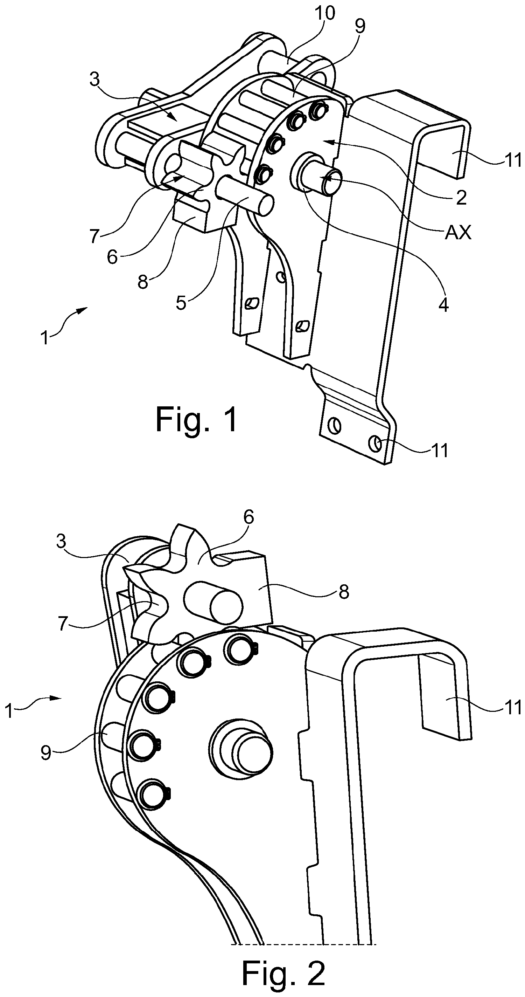

Fig. 1 zeigt ein erfindungsgemäßes Scharnier 1 mit einem Grundkörper 2 und einem Hebelarm 3. Der Hebelarm 3 ist auf einer Achse AX in Form einer Welle rotierbar gelagert, wobei die Welle auch in einer Aufnahme 4 des Grundkörpers 2 rotierbar gelagert ist. Die Welle kann auch nur in der Aufnahme 4 rotierbar gelagert und fest mit dem Hebelarm verbunden sein. Der Hebelarm 3 ist dann trotzdem um die (geometrische) Achse AX herum rotierbar. Die Achse AX bildet den Drehpunkt des Scharniers.

Der Hebelarm 3 weist eine weitere Achse 5 auf, an der ein Rotationskörper 6 mit einem Zahnsegment 7 rotierbar gelagert ist. Das Zahnsegment 7 verläuft über Dreiviertel des Umfangs des Rotationskörpers 6. An das Zehnsegment 7 anschließend weist der Rotationskörper 6 eine Anbindung 8 an eine nicht dargestellte Klappe für eine Wanne auf. Die Klappe kann insbesondere direkt an den Rotationskörper 6 angeformt sein bzw. kann der Rotationskörper an die Klappe angeformt sein.

Der Grundkörper 2 weist zudem eine Verzahnung 9 auf, welche mit dem Zahnsegment 7 des Rotationskörpers 6 korrespondiert. Die Verzahnung ist durch quer verlaufende Zylinder gebildet, die in den Grundkörper 2 eingearbeitet bzw. eingelegt sind. Die Verzahnung 9 verläuft über einen Viertelkreis. Beim Verschwenken des Hebelarms 3 verfährt der Rotationskörper 6 über die Verzahnung 9. Die Radien der Verzahnung bzw. des korrespondierenden Viertelkreises und des Rotationskörpers 6 stehen im Verhältnis 3 zu 1 zueinander. Bei dieser Ausgestaltung des Scharniers 1 verschwenkt die Anbindung 8 beim Abfahren der Verzahnung 9 somit um 270°, da der Rotationskörper eine dreiviertel Umdrehung macht, wenn es den Viertelkreis der Verzahnung 9 abfährt. Der Drehpunkt befindet sich dabei unterhalb einer nicht dargestellten Laderaumkante.

Der Hebelarm weist auf der der Achse 5 gegenüberliegenden Seite einen Anschluss 10 für einen Antrieb auf. An diese Anbindung kann beispielsweise ein Hydraulikzylinder angeschlossen werden, um den Hebelarm zu verschwenken. Darüber hinaus weist der Grundkörper 2 Haltemittel 11 in Form eines Hakens und Bohrungen zur Aufnahme von Bolzen, Nieten oder Schrauben auf, um das Scharnier 1 beispielsweise an einer nicht dargestellten Wannenwand zu befestigen.

Fig. 2 zeigt das gleiche Scharnier 1 wie Fig. 1 in einer zweiten Position. Der Hebelarm 3 wurde verschwenkt und der Rotationskörper 6 ist soweit entlang der Verzahnung 9 verfahren, wie es die Verzahnung 9 und das Zahnsegment 7 erlauben. Die Anbindung 8 und die daran angeformte nicht dargestellte Klappe sind um 270° in eine horizontale Position verschwenkt. Die nicht dargestellte Wanne ist somit in der gezeigten Position geschlossen.

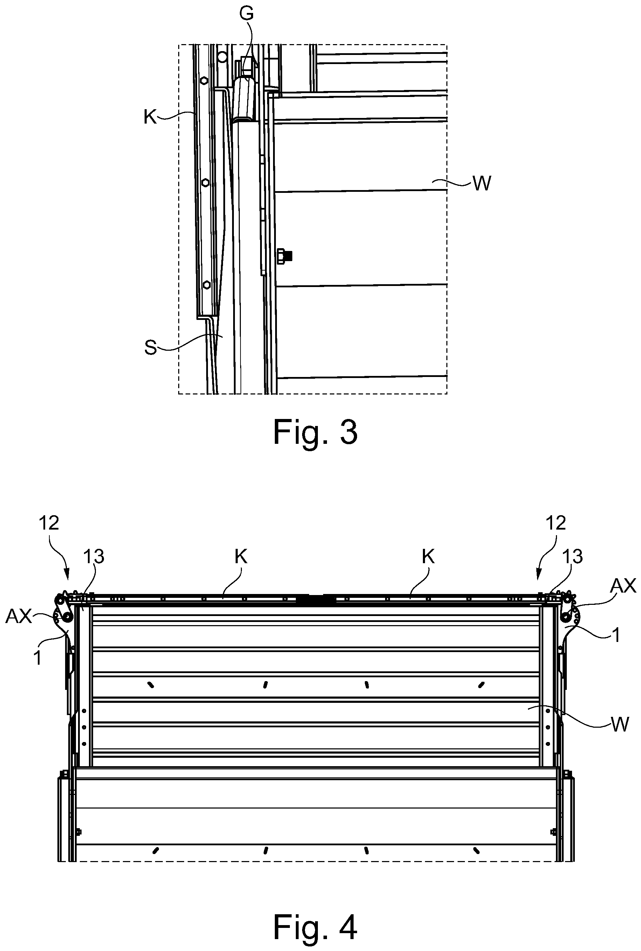

Fig. 3 zeigt einen Ausschnitt auf eine aufgeklappte Laderaumabdeckung einer Wanne W. Durch die Abmessungen des in den Fig. 1 und Fig. 2 dargestellten Scharniers, insbesondere durch den Radius des Grundköpers 2, ist es möglich, dass zwischen einer Klappe K und der Wanne in aufgeklapptem Zustand ein Spalt S besteht. Der Spalt S ist so bemessen, dass ein Heckklappengestänge G angeordnet sein kann.

Fig. 4 zeigt eine Heckansicht einer zugeklappten Wanne W mit einem erfindungsgemäßen Klappmechanismus 12. Der Klappmechanismus 12 weist eine Klappe K und ein erfindungsgemäßes Getriebe 1 der vorbeschriebenen Art auf. Die Wanne W weist an den Seitenwänden jeweils einen Klappmechanismus 12 auf, wobei jeder Klappmechanismus 12 die Hälfte der Laderaumöffnung abdeckt. Der Drehpunkt AX des Getriebes 1 befindet sich unterhalb der Laderaumkante 13 und steht in Bezug auf die Klappen K auch seitlich nicht oder kaum vor. Dadurch ist der Klappmechanismus 12 und damit die Wanne W als solche kompakt und einfach in der Handhabung.

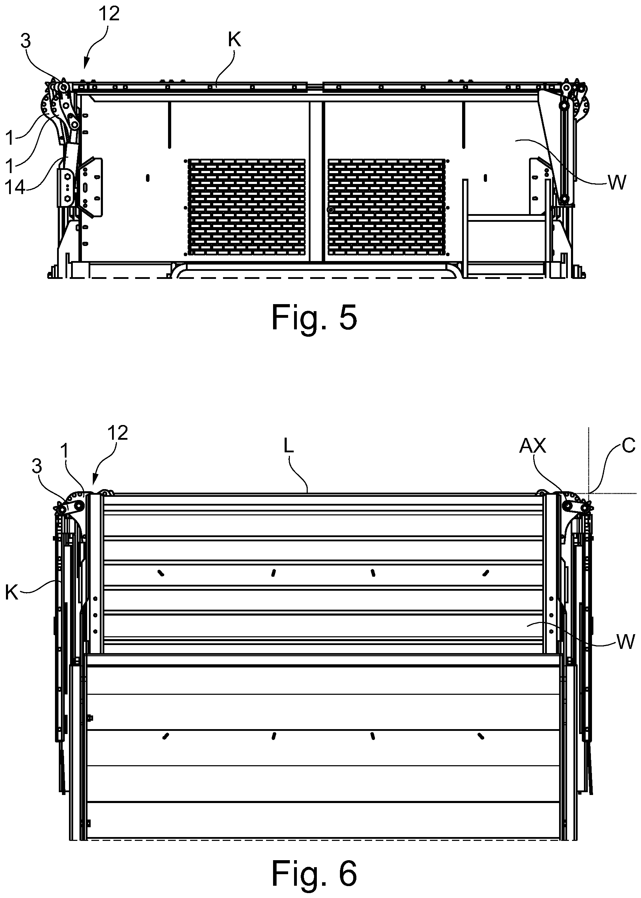

Fig. 5 zeigt die gleiche Wanne W wie Fig. 4 in einer Vorderansicht. Da die Wanne W leicht konisch verläuft, also im hinteren Bereich einen größeren Querschnitt hat als im vorderen Bereich, sind beide Scharniere 1 des Klappmechanismus 12 zu sehen. Ebenfalls dargestellt ist ein Antrieb 14 in Form eines Hydraulikzylinders in zurückgezogenem Zustand. Der Antrieb 14 ist an den Hebelarm 3 angeschlossen und hat somit das Scharnier 1 betätigt und die Wanne W verschlossen.

Fig. 6 zeigt die gleiche Wanne W wie die Fig. 4 und Fig. 5 in einem geöffneten Zustand. Die Klappen K sind um 270° verschwenkt und haben eine vertikale Position neben der Wanne W eingenommen. Der Laderaum ist somit offen. Der Drehpunkt AX des Scharniers 1 liegt im geöffneten Zustand innerhalb der gedachten äußersten Ecke C der Wanne, welche durch die aufgeklappten Klappen K und die Laderaumkante 13 definiert ist. Der Drehpunkt steht somit bezogen auf die Wanne W nicht vor.

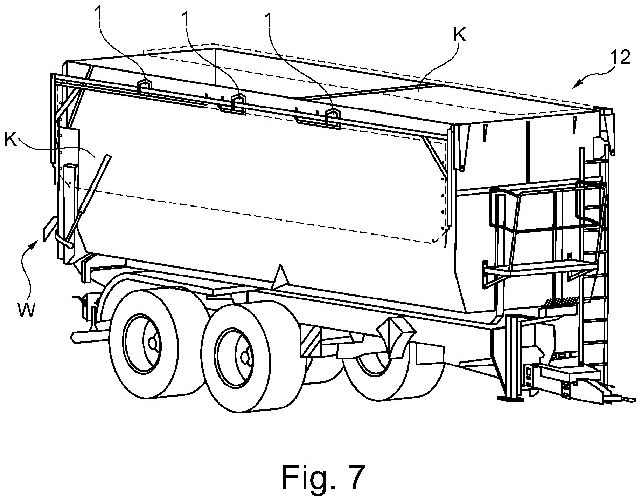

Fig. 7 zeigt eine Wanne W eines Anhängers mit zwei Klappmechanismen 12, wobei einer der Klappmechanismen 12 zugeklappt und einer der Klappmechanismen 12 aufgeklappt ist. Jeder Klappmechanismus 12 weist eine Klappe K auf, welche durch drei erfindungsgemäße Scharniere 1 gehalten und verschwenkbar ist. Dabei kann, muss aber nicht jedes Getriebe 1 angetrieben sein.

## Patentansprüche

1. Scharnier (1), insbesondere für einen Klappmechanismus (12) einer Laderaumabdeckung, **gekennzeichnet durch** ein Getriebe mit einem Hebelarm (3) und einen Grundkörper (2), wobei der Hebelarm (2) um eine Achse (AX) herum rotierbar gelagert oder befestigt ist, und wobei die Achse (AX) auch in dem Grundkörper (2) gelagert oder befestigt ist, und wobei der Hebelarm (3) eine weitere Achse (5) aufweist, an der ein Rotationskörper (6), insbesondere ein Zahnrad, mit einem, bevorzugt umfangsseitigen, Zahnsegment (7) rotierbar gelagert ist.

2. Scharnier (1) nach Anspruch 1, **dadurch gekennzeichnet, dass** der Grundkörper (2) eine Verzahnung (9) aufweist, welche mit dem Zahnsegment (7) des Hebelarms (3) korrespondiert, derart, dass das Zahnsegment (7) beim Verstellen des Hebelarms (3) in die Verzahnung (9) eingreifend entlang der Verzahnung (9) verfährt und rotiert.

3. Scharnier (1) nach Anspruch 2, **dadurch gekennzeichnet, dass** die Verzahnung (9) auf oder in einem kreisförmigen bzw. kreissegmentförmigen Abschnitt des Grundkörpers (2) angeordnet ist.

4. Scharnier (1) nach Anspruch 3, **dadurch gekennzeichnet, dass** ein Radius des kreisförmigen bzw. kreissegmentförmigen Abschnitts mindestens 1,5-mal, insbesondere 3-mal, größer ist als ein Radius des Zahnsegments (7).

5. Scharnier (1) nach einem der vorstehenden Ansprüche, **dadurch gekennzeichnet, dass** das Zahnsegment (7) auf einem Dreiviertelkreis liegt.

6. Scharnier (1) nach einem der Ansprüche 2 bis 5, **dadurch gekennzeichnet, dass** die Verzahnung (9) auf einem Viertelkreis liegt.

7. Scharnier (1) nach einem der vorstehenden Ansprüche, **dadurch gekennzeichnet, dass** der Rotationskörper (6) eine Anbindung (8) für ein Funktionselement, insbesondere für eine Klappe (K) oder einen Verdeckrahmen, aufweist.

8. Scharnier (1) nach einem der vorstehenden Ansprüche, **dadurch gekennzeichnet, dass** der Hebelarm (3) einen Antrieb (14) oder einen Anschluss (10) für einen Antrieb, insbesondere für einen Druckzylinder, aufweist.

9. Scharnier (1) nach einem der vorstehenden Ansprüche, **dadurch gekennzeichnet, dass** der Grundkörper (2) Haltemittel (11) oder Aufnahmen für Haltemittel zur Befestigung an einem Körper, insbesondere an einer Wanne (W) eines Nutzfahrzeugs oder Anhängers, aufweist.

10. Klappmechanismus (12), insbesondere für eine Laderaumabdeckung eines Nutzfahrzeugs oder Anhängers, mit zumindest einer Klappe (K) oder zumindest einem Verdeckrahmen, **gekennzeichnet durch** ein Scharnier (1) nach einem der vorstehenden Ansprüche.

11. Klappmechanismus (12) nach Anspruch 10, **dadurch gekennzeichnet, dass** die Klappe (K) oder der Verdeckrahmen durch mindestens zwei, insbesondere drei oder vier, Scharniere (1) gehalten ist.

12. Klappmechanismus (12) nach Anspruch 10 oder 11, **dadurch gekennzeichnet, dass** das Scharnier (1) derart ausgelegt ist, dass die Klappe (K) oder der Klappenrahmen um einen Winkel größer 90°, insbesondere um 270°, verschwenkt werden kann.

13. Klappmechanismus (12) nach Anspruch 12, **dadurch gekennzeichnet, dass** die Klappe (K) bei Betätigung des Scharniers (1), insbesondere eines Hebelarms (3), von einer vertikalen Lage in eine horizontale Lage verschwenkt.

14. Wanne (W), insbesondere für ein Nutzfahrzeug oder Anhänger, mit einem Klappmechanismus (12) nach einem der Ansprüche 10 bis 13.

15. Wanne (W) nach Anspruch 14, **dadurch gekennzeichnet, dass** an mindestens einer seitlichen Wannenwand mindestens ein Klappmechanismus (12) angeordnet ist.

16. Wanne (W) nach einem der Ansprüche 14 oder 15, **dadurch gekennzeichnet, dass** zwischen der Klappe (K) oder dem Verdeckrahmen und einer Wannenwand im aufgeklappten Zustand ein Spalt (S), insbesondere zur Aufnahme eines Heckklappengestänges (G) oder anderer Funktionselemente, besteht.
